# EUROPÄISCHE PATENTANMELDUNG

(11) **EP 4 233 550 A1**
(43) Veröffentlichungstag der Anmeldung: **30.08.2023**
(21) Anmeldenummer: 22159170.4
(22) Anmeldetag: 28.02.2022
(51) Int. Cl.: A21C 9/04, A21C 15/00

(54) **FÜLLSTROMTEILER**

(71) Anmelder: Albert Handtmann Maschinenfabrik GmbH & Co. KG, 88400 Biberach (DE)
(72) Erfinder: Teufel, Daniel, 88433 Schemmerhofen (DE); Meinel, Steffen, 88400 Biberach (DE)
(74) Vertreter: Grünecker Patent- und Rechtsanwälte PartG mbB

(57) **Zusammenfassung**

Die Erfindung betrifft einen Füllstromteiler für Nahrungsmittel sowie ein Verfahren zum Ausstoßen von Lebensmittel und eine Füllmaschine, wobei der Füllstromteiler einen Zulauf aufweist über den ein einströmender Massestrom in mehrere Teilmasseströme aufgeteilt, in mehreren Teilleitungen weitertransportiert und über deren Auslass portionsweise auf oder in ein Objekt ausgestoßen werden kann und mehrere gemeinsam angetriebenen Dosiereinrichtungen zum Einstellen des Volumenstroms der jeweiligen Teilmasseströme. In den jeweiligen Teilleitungen ist dabei jeweils eine Ventileinrichtung angeordnet ist, die den Teilmassestrom umleiten kann, derart, dass keine Masse über den Auslass der jeweiligen Teilleitung ausgestoßen wird.

## Beschreibung

Die Erfindung betrifft einen Füllstromteiler für Nahrungsmittel gemäß dem Oberbegriff des Anspruchs 1 sowie eine Füllmaschine mit einem solchen Füllstromteiler und einem Verfahren gemäß Anspruch 12.

Nahrungsmittel, insbesondere pastöse Masse werden bekannter Weise in einzelne Behälter abgefüllt. Die Masse, die abgefüllt werden soll, wird z.B. über eine Füllmaschine zu einem Füllstromteiler gefördert, der den einströmenden Massestrom in mehrere Teilmasseströme aufteilt und über einen entsprechenden Auslass portionsweise in das Behältnis ausstoßen kann. Der Füllstromteiler weist zum Einstellen eines exakten Volumenstroms Dosiereinrichtungen auf, z.B. Schaufelräder, die gemeinsam über einen gemeinsamen Antrieb angetrieben werden oder aber über den Teilmassestrom freilaufend angetrieben werden.

Bei der Produktion kann es passieren, dass bei einem mehrbahnigen System an der Befüllposition nicht immer alle Behältnisse zum Befüllen zur Verfügung stehen. Beispielsweise stehen bei einer achtbahnigen Produktionslinie nur sieben Behältnisse von acht bereit.

Wird das abzufüllende Produkt an der Leerposition ausgestoßen, wird die Produktionsanlage verunreinigt. Aus diesem Grund muss dann die Produktion gestoppt werden, um das abzufüllende Produkt nicht an der Leerproduktion auszustoßen. Somit laufen die vorhandenen Behältnisse ungefüllt weiter. Diese ungefüllten Behältnisse müssen dann später aus dem weiteren Produktionsprozess ausgeschleust werden.

Entsprechendes trifft nicht nur auf Behältnisse zu, sondern betrifft auch eine Dosierung direkt auf oder in ein Lebensmittel. Im Gegensatz zu den Behältnissen müssen die noch nicht dosierten Lebensmittel entsorgt werden. Ein Beispiel dafür ist die Füllung eines Berliners, die nicht stattfinden konnte oder die Dosierung einer Soße auf einen Fisch, wobei die Dose anschließend verschlossen wird, etc., das Aufbringen eines Lebensmittels auf einem Gebäck, etc. Dies ist unwirtschaftlich und nicht nachhaltig.

Alternativ könnte man auch die Dosiereinrichtungen getrennt ansteuern, d.h., dass jede Dosiereinrichtung einen Einzelantrieb aufweist, der individuell angesteuert und abgeschaltet werden kann. Eine Vorrichtung, die aber dann z.B. acht separate Pumpen aufweist, ist in mehrerlei Hinsicht aufwendig: Die Kosten sind hier wesentlich größer als bei gekoppelten Dosiereinrichtungen.

Das Handling sowie die Reinigung von acht separaten Pumpen ist ebenfalls schwieriger.

Hiervon ausgehend liegt der vorliegenden Erfindung die Aufgabe zugrunde, einen Füllstromteiler, eine Füllmaschine, sowie ein Verfahren bereitzustellen, die verhindern können, dass ungewollt Masse aus dem Auslass einer Teilleitung ausgestoßen wird, ohne den Dosierprozess oder sogar den ganzen gesamten Produktionsprozess in der Produktionslinie zu stoppen.

Erfindungsgemäß wird die Aufgabe durch die Merkmale der Ansprüche 1, 8 und 12 gelöst.

Gemäß der vorliegenden Erfindung weist der Füllstromteiler für Nahrungsmittel einen Zulauf auf, über den ein einströmender Massestrom, z.B. von der Füllmaschine, in mehrere Teilmasseströme aufgeteilt werden kann. Der Füllstromteiler ist derart ausgebildet, dass er mehrere Teilleitungen aufweist, in denen die Teilmasseströme weitertransportiert werden können. Über den jeweiligen Auslass der Teilleitungen kann der Teilmassestrom insbesondere portionsweise auf oder in ein Objekt ausgestoßen werden. Der Füllstromteiler weist mehrere gemeinsam angetriebene Dosiereinrichtungen auf zum Einstellen des Volumenstroms der jeweiligen Teilmasseströme.

Erfindungsgemäß ist in den jeweiligen Teilleitungen jeweils eine Ventileinrichtung angeordnet, die den Teilmassestrom umleiten kann, derart, dass keine Masse über den Auslass der jeweiligen Teilleitung ausgestoßen wird.

Dadurch, dass in den jeweiligen Teilleitungen jeweils eine Ventileinrichtung angeordnet ist, kann der Teilmassestrom durch die jeweilige Ventilleitung umgeleitet werden, derart, dass keine Masse über den Auslass der jeweiligen Teilleitung ausgestoßen wird. Das bedeutet, dass der Teilmassestrom gezielt in einer bestimmten Teilleitung umgeleitet werden kann, unter deren Auslass es ein Problem gibt, beispielsweise kein Objekt an der Befüllposition vorhanden ist. Alle anderen Teilleitungen können über deren Auslass Masse ausstoßen, sodass die Produktion nicht unterbrochen werden muss. Somit können alle vorhandenen Behältnisse/Lebensmittel optimal befüllt werden. Das bedeutet, dass der Teilmassestrom in jeder Teilleitung individuell umgeleitet werden kann, unabhängig von den Masseströmen in den anderen Teilleitungen.

Bei Fehlen von zu befüllenden oder zu belegenden Objekten kommt es nicht zu einer ungewünschten Verunreinigung. Auch müssen ungefüllte Behältnisse oder Lebensmittel nicht ausgeschleust und entsorgt werden. Darüber hinaus besteht die Möglichkeit, dass der umgelenkte Teilmassestrom wiederverwendet wird.

Portionsweise bedeutet in diesem Zusammenhang, dass eine bestimmte Menge (z.B. mit vorbestimmtem Gewicht und/oder Volumen) an Masse auf oder in ein Objekt ausgestoßen wird und eine entsprechende Portion in oder auf jeweilige nachfolgende Objekte ausgestoßen wird. Dabei kann die Masse intermittierend, z.B. von einem Förderwerk einer Füllmaschine, antransportiert werden, derart, dass sich bestimmte Portionsgrößen ergeben (ein bestimmtes Volumen pro Portion kann z.B. an der Füllmaschine eingestellt werden) oder aber die Masse wird kontinuierlich angefördert und die Objekte z.B. unter den Teilmasseströmen hindurchbewegt.

D.h. auch ein kontinuierlicher Betrieb des Förderwerks ist möglich, z.B., wenn Masse durchgehend z.B. in mehreren Bahnen auf ein Objekt, z.B. eine Teigbahn ausgestoßen wird. Wenn das Objekt, also z.B. die Teigbahn, aus irgendeinem Grund nicht breit genug ist oder in Transportrichtung betrachtet abreißt, kann dies detektiert werden und z. B. die jeweilige Ventileinrichtung die äußeren Auslässe verschließen.

Gemäß einer Ausführungsform kann z.B. am Übergang von einem Objekt (z.B. zu befüllenden Behälter) zum jeweils nachfolgenden Objekt über die jeweilige Ventileinrichtung der Teilmassestrom derart umgeleitet werden, dass keine Masse zwischen den Objekten ausgestoßen wird. Dies ist insbesondere dann vorteilhaft wenn die Masse kontinuierlich antransportiert wird.

Wenn in dieser Anmeldung von Befüllen oder Befüllposition gesprochen wird, ist gleichermaßen das Aufbringen von Masse, bzw. die Aufbring- oder Ausstoßposition umfasst.

Die erfindungsgemäße Lösung ist einfach und kostengünstig zu realisieren.

Vorteilhafterweise umfasst der Füllstromteiler weiter eine Steuereinrichtung. Die Steuereinrichtung kann eine eigene Steuereinrichtung des Füllstromteilers sein, kann allerdings vorteilhafterweise auch Teil einer Steuerung einer Füllmaschine sein, die den Massestrom zum Füllstromteiler fördern kann.

Ferner weist der Füllstromteiler vorzugsweise eine Sensoreinrichtung auf, die erkennen kann, ob für die jeweiligen Teilleitungen ein entsprechendes Objekt vorhanden ist und ein entsprechendes Signal an die Steuereinrichtung leiten kann.

Wenn die Sensoreinrichtung erkennt, dass für eine Teilleitung kein Objekt vorhanden ist, steuert die Steuereinrichtung die Ventileinrichtung dieser Teilleitung derart an, dass der Teilmassestrom umgeleitet wird.

Somit ist stets sichergestellt, dass Masse nicht ungewollt ausgestoßen wird und beispielsweise ein Förderband, bzw. eine Unterlage verunreinigt. Somit kann sofort erkannt werden, wenn in der jeweiligen Befüllposition unter dem Auslass der jeweiligen Teilleitung kein Objekt vorhanden ist oder vorausschauend ermittelt werden, dass zu einem bestimmten Befüllzeitpunkt kein Objekt vorhanden sein wird. Befindet sich in Transportrichtung der Objekte auf einer Transportbahn hinter der Fehlstelle wieder ein Objekt, kann an dieser Befüllposition dann wieder eine Portion ausgestoßen werden, wenn sich dieses Objekt in der Befüllposition befindet.

Dabei kann die Ventileinrichtung derart ausgebildet sein, dass der jeweilige Teilmassestrom in eine abzweigende Umlenkleitung umgeleitet wird. Über eine entsprechende Umlenkleitung kann dann der Teilmassestrom abgeleitet und gegebenenfalls wiederverwendet werden. Es ist aber auch möglich, dass der Teilmassestrom aus der Teilleitung in eine Auffangeinrichtung abgeleitet wird, ohne zusätzliche Umlenkleitung. Eine Umlenkleitung hilft aber die Masse definierter abzuführen.

Vorteilhafterweise führt die Umlenkleitung die abgeleitete Masse in eine Auffangeinrichtung. Die Masse in der Auffangeinrichtung kann dann beispielsweise wieder dem Trichter einer Füllmaschine zugeführt werden, um erneut verarbeitet zu werden. Somit muss Lebensmittel nicht verworfen werden.

Gemäß einem bevorzugten Ausführungsbeispiel weist die Ventileinrichtung ein Umlenkventil auf, insbesondere ein Mehrwegventil, z.B. ein Zwei- oder Dreiwegeventil. So kann beispielsweise in einer ersten Position der Teilmassestrom über den Auslass ausgestoßen werden und in einer zweiten Position der Teilmassestrom in eine Umlenkleitung leiten. Eine entsprechende Ausgestaltung ist einfach und kostengünstig zu realisieren.

Gemäß einem anderen Ausführungsbeispiel kann eine Ventileinrichtung ein Absperrventil in der Teilleitung aufweisen und ein in Stromrichtung vorgeschaltetes Ventil, insbesondere Überdruckventil um den Teilmassestrom umzuleiten. Wird beispielsweise in der Teilleitung das Absperrventil geschlossen, steigt der Druck in der Teilleitung an. Bei einem vorbestimmten Druck öffnet das Überdruckventil in der Teilleitung und der Teilmassestrom wird umgeleitet.

Gemäß einer bevorzugten Ausführungsform kann die abgeleitete Masse dem Massestrom vor oder im Füllstromteiler rückgeführt werden, insbesondere über die Umlenkleitung. Die Umlenkleitung kann dann beispielsweise mit einem Fülltrichter einer Füllmaschine verbunden sein. Dann ist gegebenenfalls eine weitere Pumpe nötig, die den umgeleiteten Massestrom zu einem Fülltrichter weiterpumpt.

Gemäß der vorliegenden Erfindung ist es somit möglich, dass die Dosiereinrichtungen über einen gemeinsamen Motor angetrieben werden oder die Dosiereinrichtungen von den Teilmasseströmen angetrieben werden, insbesondere als frei um eine Achse umlaufende Schaufelräder ausgebildet sind. Die vorliegende Erfindung ermöglicht, dass nur ein Antrieb, d.h. entweder ein Motor oder aber der Massestrom und eine gemeinsame Drehachse notwendig sind und trotzdem sichergestellt werden kann, dass die Teilmasseströme individuell umgeleitet werden können.

Die Erfindung betrifft auch eine Füllmaschine zum portionsweisen Ausstoßen einer Nahrungsmittelmasse mit einem Füllstromteiler nach mindestens einem der Ansprüche 1-7.

Die Füllmaschine und der Füllstromteiler sind dabei insbesondere geeignet zum Fördern von pastöser Masse, wie beispielsweise Wurstbrät, Teig, Marmelade, Cremes, Nussmasse, etc., oder aber auch stückige Nahrungsmittel, wie z.B. Fleischsalat. Die Masse kann auch eine Flüssigkeit sein, wie beispielsweise Suppe, mit oder ohne stückigen Einlagen.

Die Füllmaschine ist beispielsweise eine Füllmaschine, die zur Wurstherstellung verwendet wird. Die Füllmaschine weist einen Fülltrichter auf zur Aufnahme einer Nahrungsmittelmasse, sowie ein Förderwerk, beispielsweise eine Flügelzellenpumpe oder eine Schneckenpumpe zum Fördern der pastösen Nahrungsmittelmasse zu dem Füllstromteiler.

Die Füllmaschine kann mehrere parallele Transporteinrichtungen, insbesondere Transportbänder, aufweisen, über die die Objekte hintereinander in mehreren Bahnen in die Befüllposition gebracht werden können, d.h. unter den Auslass der entsprechenden Teilleitungen transportiert werden können.

Die Füllmaschine weist vorzugsweise eine Steuerung auf, die mit der Sensoreinrichtung verbunden ist und in Abhängigkeit eines Sensorsignals die Ventileinrichtungen ansteuert. Es ist besonders vorteilhaft, wenn die Steuereinrichtung der Füllmaschine auch den Füllstromteiler sowie die Sensoreinrichtung ansteuert. Die Sensoreinrichtung kann beispielsweise ein optischer Sensor sein, wie z.B. Farbsensoren, Laserreflextaster oder auch ein Kamerasystem, mit dem der gesamte Befüllbereich überwacht werden kann. Metallische Objekte können auch mit induktiven Sensoren erkannt werden. Aber auch kapazitive Sensoren oder Ultraschall-Sensoren sind zum Erkennen der Objekte geeignet. Die Sensoreinrichtung umfasst dabei z.B. mehrere Sensorelemente, d.h. je ein Sensorelement für eine entsprechende Bahn.

Es ist besonders vorteilhaft wenn die Sensoreinrichtung in Transportrichtung der Objekte betrachtet vor der Befüllposition angeordnet ist. Dann kann die Steuereinrichtung rechtzeitig ein Signal an die Ventileinrichtung schicken, so dass sichergestellt ist, dass zum Befüllzeitpunkt des fehlenden Objekts kein Lebensmittel ausgestoßen wird, d.h. zu dem Zeitpunkt, zu dem das fehlende Objekt eigentlich in der Befüllposition angekommen wäre.

Die Steuereinrichtung kann auch zusätzlich oder alternativ die Fördereinrichtungen in Abhängigkeit eines Sensorsignals ansteuern. Für den Fall, dass alle Objekte an der Befüllposition fehlen sollten, kann z.B. die Steuerung die Fördereinrichtungen, z.B. Transportbänder so ansteuern, dass jeweils die Transporteinrichtung in Transportrichtung bewegt wird in der wenigstens ein Objekt zur Verfügung steht, damit das jeweilige Objekt dann in die Befüllposition transportiert wird. Es ist auch möglich, dass die Objekte, z.B. Behälter in mehreren Reihen auf einer gemeinsamen Transporteinrichtung, z.B. Transportband gefördert werden, und dann wenn alle Objekte an der Befüllposition fehlen, die Transporteinrichtung soweit bewegt wird bis zumindest ein Behälter an der Befüllposition angeordnet ist.

Die Erfindung betrifft auch ein Verfahren zum insbesondere portionsweisen Ausstoßen von Nahrungsmittelmasse mit einer Füllmaschine nach mindestens Anspruch 8, wobei die Nahrungsmittelmasse aus dem Fülltrichter über das Förderwerk zum Füllstromteiler gefördert wird, in dem der einströmende Massestrom in mehrere Teilmasseströme aufgeteilt wird. Die Masse wird in mehreren Teilleitungen weitertransportiert und über den Auslass der Teilleitungen portionsweise auf oder in ein Objekt ausgestoßen. Über mehrere gemeinsam angetriebene Dosiereinrichtungen wird der Volumenstrom der jeweiligen Teilmasseströme eingestellt. In den jeweiligen Teilleitungen ist jeweils eine Ventileinrichtung angeordnet, die auf ein Signal der Steuereinrichtung der Füllmaschine den Teilmassestrom für jede Teilleitung individuell umleiten kann, derart, dass keine Masse über den Auslass der jeweiligen Teilleitung ausgestoßen wird.

Es ist vorteilhaft, wenn die Steuereinrichtung dann ein Signal an die Ventileinrichtung zum Umleiten eines Teilmassestroms sendet, wenn eine Sensoreinrichtung erkennt, dass für eine Teilleitung kein Objekt vorhanden ist. Dieser Teilmassestrom wird dann von der Ventileinrichtung umgeleitet. Dabei muss die Sensoreinrichtung nicht zwangsläufig an der Befüllposition das Vorhandensein eines Objekts detektieren, sondern kann eine Detektion im Produktionsstrom auch bereits an einer in Transportrichtung davor angeordneten Position detektieren, wobei eine Steuereinrichtung dann vorausschauend bestimmen kann, dass für eine bestimmte Position zu einem bestimmten Zeitpunkt kein Objekt vorhanden ist.

Gemäß einem bevorzugten Ausführungsbeispiel wird das Signal zum Umleiten des Teilmassestroms gesendet, bevor eine Portion aus der Teilleitung zu einem Ausstoßzeitpunkt in das Objekt hätte ausgestoßen werden sollen. Die Ventileinrichtungen der Teilleitungen, für die von der Sensoreinrichtung erkannt wurde, dass ein Objekt zum Ausstoßzeitpunkt vorhanden ist, wird der jeweilige Teilmassestrom nicht umgeleitet.

Die vorliegende Erfindung ermöglicht somit den Teilmassestrom selektiv zu stoppen.

Die vorliegende Erfindung wird nachfolgend unter Bezugnahme der folgenden Figuren näher erläutert:
Figur 1 zeigt grob schematisch einen Füllstromteiler gemäß der vorliegenden Erfindung.
Figur 2 zeigt in perspektivischer Darstellung eine Füllmaschine mit einem Füllstromteiler gemäß der vorliegenden Erfindung.
Figur 3 zeigt eine schematische Aufsicht auf eine Füllmaschine mit einem Füllstromteiler gemäß der vorliegenden Erfindung, bei der alle Objekte vorhanden sind.
Figur 4 entspricht der in Figur 3 dargestellten Füllmaschine gemäß der vorliegenden Erfindung mit fehlenden Objekten.
Figur 5a zeigt grob schematisch eine Ventileinrichtung gemäß der vorliegenden Erfindung in einem ersten Schaltzustand.
Figur 5b zeigt die in Figur 5a gezeigte Ventileinrichtung in einem zweiten Schaltzustand.
Figur 6 zeigt in perspektivischer Darstellung einen Füllstromteiler mit einer Ventileinrichtung und einer Umlenkleitung.
Figur 7 zeigt in perspektivischer Darstellung einen Füllstromteiler gemäß der vorliegenden Erfindung mit Absperrventil und Überdruckventil.
Figur 8 zeigt in perspektivischer Darstellung einen Füllstromteiler mit Ventileinrichtung und Auffangeinrichtung.

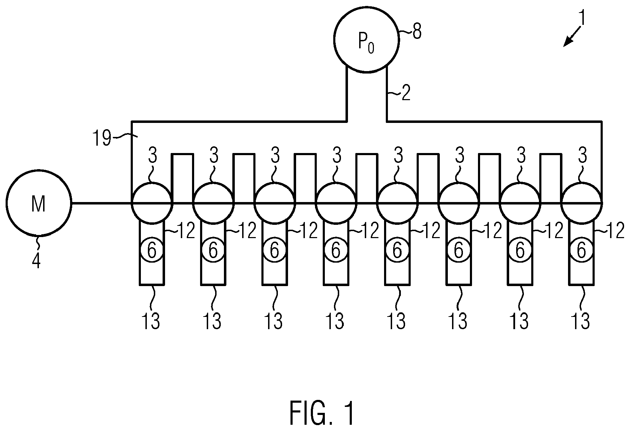

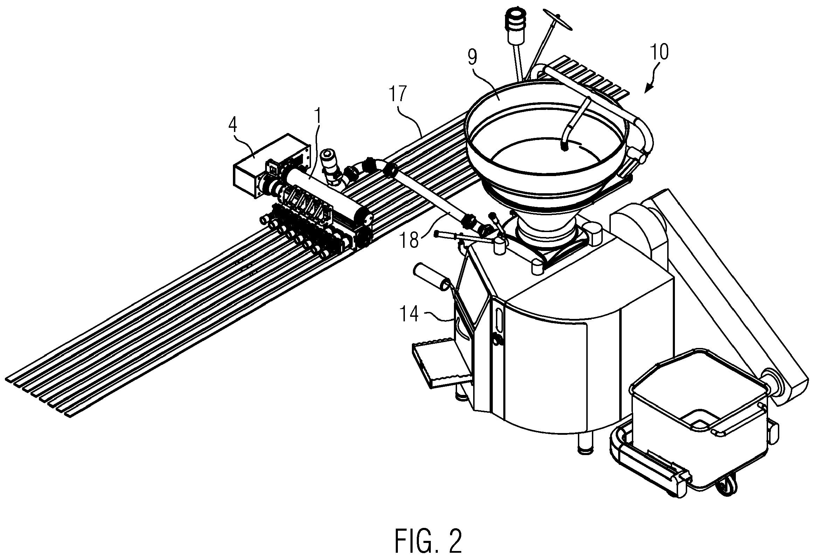

Figur 1 zeigt grob schematisch einen Füllstromteiler 1 gemäß der vorliegenden Erfindung und Figur 2 in perspektivischer Darstellung eine Füllmaschine mit einem Füllstromteiler.

Figur 2 zeigt die Füllmaschine 10 mit einem Trichter 9 zur Aufnahme der Masse, insbesondere pastösen Masse. Das Nahrungsmittel kann entweder eine pastöse Masse sein, wie beispielsweise Wurstbrät, Teig, Marmelade, Cremes, Nussmasse, etc., oder aber auch eine stückige, wie z.B. Fleischsalat. Die Masse kann auch eine Flüssigkeit sein, wie beispielsweise Suppe, mit oder ohne stückigen Einlagen. Die Füllmaschine 10 ist beispielsweise ein Vakuumfüller. Die Füllmaschine umfasst ein Förderwerk 8, das die Masse in eine Leitung, hier insbesondere Rohr 18 und von der Leitung 18 zu dem Füllstromteiler 1 fördern kann. Das Förderwerk kann beispielsweise eine Flügelzellenpumpe oder eine Schneckenpumpe, etc. sein. In Strömungsrichtung betrachtet ist nach der Leitung 18 der Füllstromteiler 1 angeordnet.

Der Füllstromteiler 1 teilt den vom Förderwerk 8 geförderten Massestrom in mehrere Teilmasseströme auf, wie in Figur 1 gezeigt ist, z.B. in acht Teilströme. Der Massestrom erreicht den Füllstromteiler 1 über einen Zulauf 2 und strömt in einen Sammelraum 19. Dann verzweigt sich der gemeinsame Raum 19 in mehrere Teilleitungen 12 - in Figur 1 und Figur 2 in acht Teilleitungen. Damit aufgrund des Druckgefälles der Volumenstrom in den einzelnen Teilleitungen 12 konstant ist, sind Dosiereinrichtungen 3 in den entsprechenden Teilleitungen 12 vorgesehen.

In Figur 1 sind die Dosiereinrichtungen 3 schematisch in den Teilleitungen dargestellt. Die Dosiereinrichtungen 3 können aber auch am Anfang der Leitungen 12 angeordnet sein. Die Dosiereinrichtungen werden bei dem in Figur 1 dargestellten Ausführungsbeispiel von einem gemeinsamen Antrieb insbesondere dem gemeinsamen Motor 4 angetrieben und sind beispielsweise derart gekoppelt, dass in jeder Leitung nach der jeweiligen Dosiereinrichtung ein gleicher Volumenstrom vorliegt.

Es ist aber auch möglich, dass die Dosiereinrichtungen 3 vom Produkt, d.h. von den Teilmasseströmen angetrieben werden und z.B. als frei um eine Achse umlaufende Schaufelräder ausgebildet sind, die miteinander gekoppelt sind, d.h. insbesondere um eine gemeinsame Achse umlaufen. Die Teilleitungen 12 können Rohre sein oder aber auch zumindest teilweise als Schläuche ausgebildet sein, bzw. am Ausstoßende hier nicht dargestellte Düsen aufweisen. Über den Auslass 13 kann dann der Teilmassestrom insbesondere portionsweise auf oder in jeweilige Objekte ausgestoßen werden. Die Objekte 7 können dabei zu befüllende Behältnisse sein, wie z. B. Gläser oder Dosen sein, in die beispielsweise Marmelade abgefüllt wird. Es können aber auch Lebensmittel sein, auf die (oder in die) Masse aufgebracht wird, wie beispielsweise Soße oder Gewürzpaste auf einen Fisch oder z. B. Schokoladenmasse auf einen Teigling. Es können auch bereits gegarte Gebäckstücke sein, wie beispielsweise Berliner, in die Marmelade eingespritzt (portioniert) wird.

Die Objekte 7 werden dabei z.B., wie in Figur 2 dargestellt ist, über jeweilige Transporteinrichtungen 17 (in Figur 2 beispielsweise acht Förderbänder) unter den Auslass 13 des Füllstromteilers in eine Befüllposition P gefördert, um die Objekte 7 zu befüllen oder die Masse auf die Objekte aufzubringen. Die Transporteinrichtungen können auch von der Füllmaschinensteuerung angesteuert werden oder die Steuerung der Transporteinrichtungen ist mit der Füllmaschinensteuerung verbunden.

Der Füllstromteiler kann auch vorzugsweise eine Sensoreinrichtung 5 aufweisen, die erkennen kann, ob für die jeweiligen Teilleitungen 12 ein entsprechendes Objekt 7 zum Befüllzeitpunkt an der Befüllposition P vorhanden ist.

In Figur 2 ist eine entsprechende Sensoreinrichtung 5 nur schematisch dargestellt. Eine entsprechende Sensoreinrichtung kann mehrere, insbesondere optische Sensoren umfassen, die das Vorhandensein der Objekte 7 auf den entsprechenden Transporteinrichtungen detektieren können.

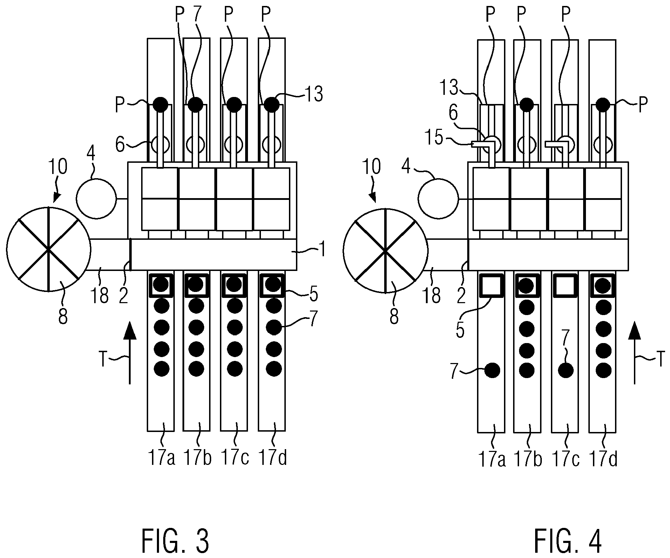

Figuren 3 und 4 zeigen Füllmaschinen 10 mit erfindungsgemäßen Füllstromteilern 1 in größerem Detail. In Figuren 3 und 4 sind einfachheitshalber Füllstromteiler mit vier Teilleitungen sowie vier Transporteinrichtungen 17 a, b, c, d gezeigt. Die Anzahl der Teilleitungen liegt vorzugsweise in einem Bereich von 2 bis 24. Dann können eine entsprechende Anzahl an Transporteinrichtungen 17 vorgesehen sein. In Figur 3 erkennt man deutlich das Förderwerk 8 der Füllmaschine 10 sowie den über eine Leitung 18 verbundenen Füllstromteiler 1 und die gemeinsam angetriebenen Dosiereinrichtungen 3. In Figur 3 sind die Objekte 7 z.B. zu befüllende Behältnisse, auf den Transporteinrichtungen 17 a, b, c, d gleichmäßig verteilt angeordnet. Es gibt keine Fehlstellen.

Über die Sensoreinrichtung 5 kann erkannt werden, ob Objekte 7 auf den jeweiligen Transporteinrichtungen 17 a, b, c, d vorhanden sind. Dabei ist die Sensoreinrichtung 5, bzw. deren jeweilige Einzelsensoren mit einer nicht dargestellten Steuereinrichtung 14 verbunden, die ein entsprechendes Signal empfängt. Vorzugsweise ist diese Steuereinrichtung 14 in der Steuerung 14 der Füllmaschine integriert (siehe Figur 2). Die Sensoreinrichtung weist hier mehrere Sensoren in einem Bereich in Transportrichtung T betrachtet vor dem Auslass 13 der jeweiligen Teilleitungen, d.h. vor der Auslassposition P auf den jeweiligen Transporteinrichtungen auf. In der Figur 3 hat die Sensoreinrichtung 5 erkannt, dass es keine Fehlstellen gibt und alle Objekte 7 korrekt vorhanden sind, sodass der Produktionsablauf normal erfolgen kann, d.h., über den Auslass 13 der jeweiligen Teilleitungen in die einzelnen Objekte 7 an den Portionspositionen P entsprechende Masseportionen ausgestoßen werden können.

Gemäß der vorliegenden Erfindung umfasst, wie auch in Figur 1 dargestellt ist, der Füllstromteiler in den jeweiligen Teilleitungen 12 eine Ventileinrichtung, die den Teilmassestrom in der jeweiligen Teilleitung 12 umleiten kann, derart, dass keine Masse über den Auslass 13 der jeweiligen Teilleitung ausgestoßen wird, insbesondere, wenn Fehlstellen erkannt werden.

Die jeweilige Ventileinrichtung 6 kann über die Steuereinrichtung 14 angesteuert werden. Vorzugsweise wird die Ventileinrichtung 6 dann angesteuert, wenn von der Sensoreinrichtung 5 erkannt wird, dass für eine bestimmte Teilleitung kein Objekt 7 vorhanden ist. Dann kann der Teilmassestrom umgeleitet werden. Figur 4 zeigt, dass es in den Transporteinrichtungen 17a und 17c Störungen gibt, d.h., dass hier Objekte 7, die eigentlich befüllt werden sollten, fehlen. Diese Fehlstellen können über die Sensoreinrichtung 5, d.h., die jeweiligen Einzelsensoren 5 detektiert werden. Die Steuereinrichtung 14 steuert dann die Ventileinrichtung 6 in der jeweiligen Teilleitung an, dass der Teilmassestrom umgeleitet wird, wenn das nicht vorhandene Objekt 7 befüllt werden sollte. Die Objekte 7, die auf den anderen Transporteinrichtungen 17b und 17d angefördert werden, können dabei regulär weiter befüllt werden.

Wenn die Sensoreinrichtung erkennt, dass ein Objekt 7 fehlt kann entweder der Massestrom sofort umgeleitet werden oder aber, wenn der jeweilige Sensor in Transportrichtung vor der Befüllposition angeordnet ist, zeitverzögert, so dass vorhandene vorauseilende Behältnisse noch fertig befüllt werden können. Die Steuerung kann nämlich bestimmen, aufgrund der ihr bekannten Parameter, wie z.B. Geschwindigkeit der Transporteinrichtungen 17 a, b, c, d etc. zu welchem Zeitpunkt eine Masse in oder auf das Objekt 7 abgefüllt werden wird, also wann das fehlende Objekt in der Befüllposition wäre.

Sobald die Sensoreinrichtung erkennt, dass z.B. auf der Transporteinrichtung 17c sich wieder ein Objekt befindet, z.B. das Objekt 7ₓ auf dem Transportband 17c, sendet es ein entsprechendes Signal an die Steuereinrichtung 14, derart, dass dann, wenn sich dieses Objekt in der Befüllposition P befindet, die Ventileinrichtung 6 derart angesteuert wird, dass Produkt über den Auslass 13 in das Produkt gefüllt werden kann. Ein neues Objekt 7y befindet sich erst einen Füllzyklus später auf der Transporteinrichtung 17a als das Objekt 7 x auf der Transporteinrichtung 17c. Das bedeutet, dass dann, wenn die Sensoreinrichtung 5 auch hier das Objekt 7y detektiert, die Ventileinrichtung 6 derart von der Steuereinrichtung 14 angesteuert wird, dass im entsprechend nachfolgenden Befüllzyklus wieder Masse aus dem Auslass 13 in oder auf das Behältnis 7y gefüllt wird.

Bei den vorherigen Ausführungsbeispielen befindet sich die Sensoreinrichtung vor dem Füllstromteiler 1 und die Steuereinrichtung berechnet, wann sich ein entsprechendes Behältnis 7 in der Befüllposition P befindet. Es ist aber auch möglich, dass die Sensoreinrichtung 5 direkt im Bereich der Füllpositionen P angeordnet ist. Sind allerdings die jeweiligen Sensoren der Sensoreinrichtung in Transportrichtung T betrachtet vor der Befüllposition P angeordnet, so kann vorausschauend rechtzeitig ein Signal an die Ventileinrichtungen 6 geschickt werden, sodass rechtzeitig der Produktstrom aus der jeweiligen Teilleitung 12 umgeleitet werden kann.

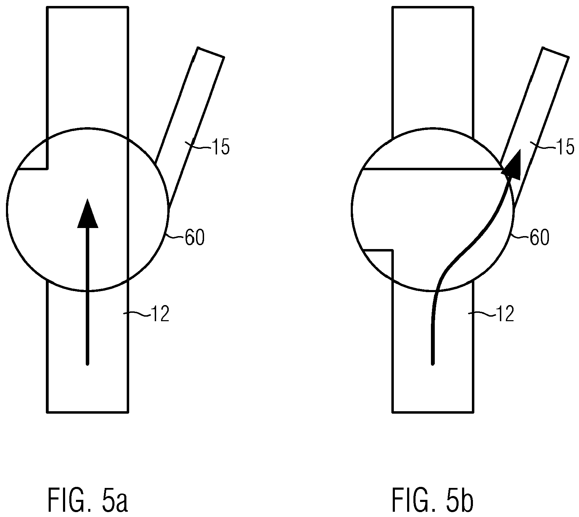

Figuren 5a und 5b zeigen ein Beispiel für eine entsprechende Ventileinrichtung. In Figur 5a umfasst die Ventileinrichtung ein Zweiwegeventil. Hier ist das Ventil 60 in einer Stellung, dass der Füllstrom durch die Teilleitung 12 zum Auslass 13 strömen kann. Figur 5b zeigt das Zweiwegeventil in einer zweiten Stellung, wobei hier der Teilstrom aus der Teilleitung 12 nicht zum Auslass 13 geleitet wird, sondern in eine Umlenkleitung 15. Ein Zweiwegeventil ist hier nur ein Beispiel.

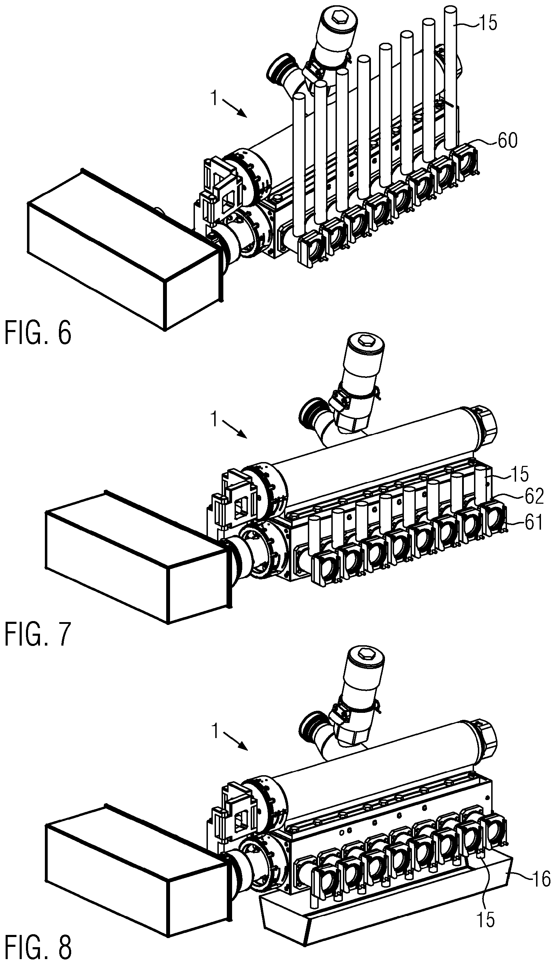

Es kann auch beispielsweise ein Drei- oder Mehrwegeventil verwendet werden und Masse in verschiedene Leitungen ausstoßen. Figur 6 zeigt eine entsprechende Anordnung im Füllstromteiler. Über die Leitung 15 kann dann das Produkt wieder rückgeführt werden, beispielsweise in den Fülltrichter 9 der Füllmaschine 10. Alternativ dazu kann der jeweilige Teilproduktstrom über ein entsprechendes Zweiwegeventil in eine Auffangeinrichtung 16, z.B. eine Wanne, geleitet werden, siehe Fig.8. Diese Wanne kann dann nach einer gewissen Zeit wieder dem Prozess zugeführt werden, z.B. in den Trichter 9 der Füllmaschine 10 geleert werden.

Es ist auch möglich, dass die Ventileinrichtung 16 ein Absperrventil 61 und ein Überdruckventil 62 aufweist, wie in Fig. 7 gezeigt ist. Verschließt das Ventil 61 die Teilleitung 12, steigt der Druck in der Teilleitung 12 und das Überdruckventil 62 kann sich öffnen und der Teilvolumenstrom über eine entsprechende Umlenkleitung 15 abgeleitet werden.

Gemäß dem erfindungsgemäßen Verfahren wird Nahrungsmittelmasse mit einer Füllmaschine 10 vom Fülltrichter 9 über das Förderwerk 8 zum Füllstromteiler 1 gefördert und im Füllstromteiler 1 in mehrere Teilmasseströme aufgeteilt, in mehreren Teilleitungen 12 weitertransportiert und über deren Auslass 13 in einer Befüllposition P insbesondere portionsweise auf oder in die Objekte 7 ausgestoßen. Die Objekte 7 werden auf mehreren parallelen Bahnen 17 hintereinander antransportiert. Wird detektiert, dass ein Objekt fehlt, wird von der Sensoreinrichtung ein entsprechendes Signal an die Steuereinrichtung 14 geschickt, die dann die Ventileinrichtung 6 in der Teilleitung 12, für die das fehlende Objekt detektiert wurde, derart ansteuert, dass zumindest die Nahrungsmittelportion, die für dieses fehlende Objekt 7 bestimmt war über eine Umlenkleitung 15 umgeleitet wird. Die restlichen Ventileinrichtungen können weiter so geschaltet bleiben, dass Nahrungsmittel in bzw. auf die Objekte 7 ausgestoßen wird. Wird im Anschluss erkannt, dass auf der Bahn mit Fehlstelle wieder ein Objekt 7 vorhanden ist, kann die Ventileinrichtung 6 wieder so geschaltet werden, dass, wenn das Objekt in der Befüllposition P ist, Masse über den Auslass ausgestoßen wird. Der umgeleitete Teilmassestrom kann wie zuvor beschrieben wieder der Produktion zurückgeführt werden.

Wesentlich bei allen Ausführungsformen ist, dass die einzelnen Ventileinrichtungen 6 in den jeweiligen Teilleitungen 12 selektiv und individuell angesteuert werden können, damit, wenn notwendig, der Teilmassestrom in einer jeweiligen Teilleitung umgeleitet werden kann, während andere Teilmasseströme in den anderen Teilleitungen über den entsprechenden Auslass 13 ausgestoßen werden können. Somit muss z.B. bei Fehlen eines Objekts 7 nicht der komplette Prozess gestoppt werden.

## Patentansprüche

1. Füllstromteiler (1) für Nahrungsmittel mit einem Zulauf (2), über den ein einströmender Massestrom in mehrere Teilmasseströme aufgeteilt, in mehreren Teilleitungen (12) weitertransportiert und über deren Auslass (13) insbesondere portionsweise auf oder in ein Objekt (7) ausgestoßen werden kann und mit
mehreren gemeinsam angetriebenen Dosiereinrichtungen (3) zum Einstellen des Volumenstroms der jeweiligen Teilmasseströme,
**dadurch gekennzeichnet, dass**
in den jeweiligen Teilleitungen (12) jeweils eine Ventileinrichtung (6) angeordnet ist, die den Teilmassestrom umleiten kann, derart, dass keine Masse über den Auslass der jeweiligen Teilleitung (12) ausgestoßen wird.

2. Füllstromteiler (1) nach Anspruch 1, **dadurch gekennzeichnet, dass** der Füllstromteiler weiter umfasst:
- eine Steuereinrichtung (14),
- eine Sensoreinrichtung (6), die derart ausgebildet ist, dass sie erkennen kann, ob für die jeweiligen Teilleitungen (12) ein entsprechendes Objekt (7) zum Befüllen vorhanden ist und ein entsprechendes Signal an die Steuereinrichtung (14) leitet, wobei
wenn die Sensoreinrichtung (5) erkennt, dass für eine Teilleitung (12) kein Objekt (7) vorhanden ist, die Steuereinrichtung (14) die Ventileinrichtung (6) dieser Teilleitung (12) derart ansteuert, dass der Teilmassestrom umgeleitet wird.

3. Füllstromteiler (1) nach Anspruch 1 oder 2, **dadurch gekennzeichnet, dass** die Ventileinrichtung (6) derart ausgebildet ist, dass der jeweilige Teilmassestrom in eine Umlenkleitung (15) umgeleitet werden kann oder aus der Teilleitung (12) in eine Auffangeinrichtung (16) abgeleitet werden kann.

4. Füllstromteiler (1) nach mindestens einem der Ansprüche 1-3, **dadurch gekennzeichnet, dass** die Umlenkleitung (15) die abgeleitete Masse in eine Auffangeinrichtung (16) umleitet.

5. Füllstromteiler (1) nach mindestens einem der vorhergehenden Ansprüche, **dadurch gekennzeichnet, dass** die jeweilige Ventileinrichtung (6) ein Umlenkventil (60), insbesondere ein Mehrwegeventil aufweist.

6. Füllstromteiler (1) nach mindestens einem der vorhergehenden Ansprüche, **dadurch gekennzeichnet, dass** die Ventileinrichtung (6) ein Absperrventil (61) und ein in Strömungsrichtung betrachtet vorgeschaltetes Ventil (62), insbesondere Überdruckventil (62) aufweist, um den Teilmassestrom umzuleiten.

7. Füllstromteiler (1) nach mindestens einem der vorhergehenden Ansprüche, **dadurch gekennzeichnet, dass** die Dosiereinrichtungen (3) über einen gemeinsamen Motor (4) angetrieben werden oder die Dosierelemente (3) von den Teilmasseströmen angetrieben werden und insbesondere als frei um eine Achse umlaufende Schaufelräder ausgebildet sind.

8. Füllmaschine (10) zum portionsweisen Ausstoßen einer Nahrungsmittelmasse mit einem Füllstromteiler (1) nach mindestens einem der Ansprüche 1-7, wobei die Füllmaschine (10) einen Fülltrichter (9) zur Aufnahme einer pastösen Masse sowie ein Förderwerk (8) umfasst zum Fördern der pastösen Masse zu dem Füllstromteiler (1).

9. Füllmaschine nach Anspruch 8, **dadurch gekennzeichnet, dass** die Füllmaschine (10) weiter mehrere parallele Transporteinrichtungen (17), insbesondere Transportbänder, aufweist, über die die Objekte (7) in mehreren Bahnen jeweils in eine Befüllposition (P) unter den Auslass (13) der entsprechenden Teilleitungen (12) transportiert werden können.

10. Füllmaschine (10) nach Anspruch 8 oder 9, **dadurch gekennzeichnet, dass** die Füllmaschine (10) eine Steuereinrichtung (14) aufweist, die mit der Sensoreinrichtung (5) verbunden ist und in Abhängigkeit eines Sensorsignals die Ventileinrichtung (6) ansteuert und/oder die Transporteinrichtung oder Transporteinrichtungen (17).

11. Füllmaschine (10) nach mindestens einem der Ansprüche 8 bis 10, **dadurch gekennzeichnet, dass** die Sensoreinrichtung, in Transportrichtung der Objekte betrachtet vor der Befüllposition angeordnet ist.

12. Verfahren zum Ausstoßen von Nahrungsmittelmasse mit einer Füllmaschine (10) nach mindestens einem der Ansprüche 8-11, wobei die Masse aus dem Fülltrichter (9) über das Förderwerk (8) zum Füllstromteiler (1) gefördert wird,
im Füllstromteiler (1) ein einströmender Massestrom in mehrere Teilmasseströme aufgeteilt, in mehreren Teilleitungen (12) weitertransportiert und über deren Auslass (13) insbesondere portionsweise auf oder in ein Objekt ausgestoßen wird,
wobei über mehrere gemeinsam angetriebene Dosiereinrichtungen (3) der Volumenstrom der jeweiligen Teilmasseströme eingestellt wird, **dadurch gekennzeichnet, dass**
in den jeweiligen Teilleitungen (12) jeweils eine Ventileinrichtung (6) angeordnet ist, die auf ein Signal einer Steuereinrichtung (14) der Füllmaschine (10) den Teilmassestrom für jede Teilleitung (12) individuell umleiten kann, derart, dass keine Masse über den Auslass der jeweiligen Teilleitung (12) ausgestoßen wird.

13. Verfahren nach Anspruch 12, **dadurch gekennzeichnet, dass** die Steuereinrichtung (14) ein Signal an die Ventileinrichtung (6) zum Umleiten eines Teilmassestroms sendet, wenn eine Sensoreinrichtung (5) erkennt, dass für eine Teilleitung (12) kein Objekt vorhanden ist und dieser Teilmassestrom von der Ventileinrichtung (6) umgeleitet wird.

14. Verfahren nach Anspruch 13, **dadurch gekennzeichnet, dass** das Signal zum Umleiten des Teilmassestroms gesendet wird, bevor eine Portion aus der Teilleitung (12) zu einem Ausstoßzeitpunkt in das fehlende Objekt (7) hätte ausgestoßen werden sollen, während die Ventileinrichtungen (6) der anderen Teilleitungen (12) für die von der Sensoreinrichtung (5) erkannt wurde, dass ein Objekt (7) vorhanden ist, den jeweiligen Teilmassestrom nicht umleiten.

## Geänderte Patentansprüche

### Geänderte Patentansprüche gemäss Regel 137(2) EPÜ.

1. Füllstromteiler (1) für Nahrungsmittel mit einem Zulauf (2), über den ein einströmender Massestrom in mehrere Teilmasseströme aufgeteilt, in mehreren Teilleitungen (12) weitertransportiert und über deren Auslass (13) insbesondere portionsweise auf oder in ein Objekt (7) ausgestoßen werden kann und mit
mehreren gemeinsam angetriebenen Dosiereinrichtungen (3) zum Einstellen des Volumenstroms der jeweiligen Teilmasseströme,
**dadurch gekennzeichnet, dass**
in den jeweiligen Teilleitungen (12) jeweils eine Ventileinrichtung (6) angeordnet ist, die den Teilmassestrom individuell umleiten kann, derart, dass keine Masse über den Auslass der jeweiligen Teilleitung (12) ausgestoßen wird, unabhängig von den Masseströmen in den anderen Teilleitungen.

2. Füllstromteiler (1) nach Anspruch 1, **dadurch gekennzeichnet, dass** der Füllstromteiler weiter umfasst:
- eine Steuereinrichtung (14),
- eine Sensoreinrichtung (6), die derart ausgebildet ist, dass sie erkennen kann, ob für die jeweiligen Teilleitungen (12) ein entsprechendes Objekt (7) zum Befüllen vorhanden ist und ein entsprechendes Signal an die Steuereinrichtung (14) leitet, wobei
wenn die Sensoreinrichtung (5) erkennt, dass für eine Teilleitung (12) kein Objekt (7) vorhanden ist, die Steuereinrichtung (14) die Ventileinrichtung (6) dieser Teilleitung (12) derart ansteuert, dass der Teilmassestrom umgeleitet wird.

3. Füllstromteiler (1) nach Anspruch 1 oder 2, **dadurch gekennzeichnet, dass** die Ventileinrichtung (6) derart ausgebildet ist, dass der jeweilige Teilmassestrom in eine Umlenkleitung (15) umgeleitet werden kann oder aus der Teilleitung (12) in eine Auffangeinrichtung (16) abgeleitet werden kann.

4. Füllstromteiler (1) nach mindestens einem der Ansprüche 1-3, **dadurch gekennzeichnet, dass** die Umlenkleitung (15) die abgeleitete Masse in eine Auffangeinrichtung (16) umleitet.

5. Füllstromteiler (1) nach mindestens einem der vorhergehenden Ansprüche, **dadurch gekennzeichnet, dass** die jeweilige Ventileinrichtung (6) ein Umlenkventil (60), insbesondere ein Mehrwegeventil aufweist.

6. Füllstromteiler (1) nach mindestens einem der vorhergehenden Ansprüche, **dadurch gekennzeichnet, dass** die Ventileinrichtung (6) ein Absperrventil (61) und ein in Strömungsrichtung betrachtet vorgeschaltetes Ventil (62), insbesondere Überdruckventil (62) aufweist, um den Teilmassestrom umzuleiten.

7. Füllstromteiler (1) nach mindestens einem der vorhergehenden Ansprüche, **dadurch gekennzeichnet, dass** die Dosiereinrichtungen (3) über einen gemeinsamen Motor (4) angetrieben werden oder die Dosierelemente (3) von den Teilmasseströmen angetrieben werden und insbesondere als frei um eine Achse umlaufende Schaufelräder ausgebildet sind.

8. Füllmaschine (10) zum portionsweisen Ausstoßen einer Nahrungsmittelmasse mit einem Füllstromteiler (1) nach mindestens einem der Ansprüche 1-7, wobei die Füllmaschine (10) einen Fülltrichter (9) zur Aufnahme einer pastösen Masse sowie ein Förderwerk (8) umfasst zum Fördern der pastösen Masse zu dem Füllstromteiler (1).

9. Füllmaschine nach Anspruch 8, **dadurch gekennzeichnet, dass** die Füllmaschine (10) weiter mehrere parallele Transporteinrichtungen (17), insbesondere Transportbänder, aufweist, über die die Objekte (7) in mehreren Bahnen jeweils in eine Befüllposition (P) unter den Auslass (13) der entsprechenden Teilleitungen (12) transportiert werden können.

10. Füllmaschine (10) nach Anspruch 8 oder 9, **dadurch gekennzeichnet, dass** die Füllmaschine (10) eine Steuereinrichtung (14) aufweist, die mit der Sensoreinrichtung (5) verbunden ist und in Abhängigkeit eines Sensorsignals die Ventileinrichtung (6) ansteuert und/oder die Transporteinrichtung oder Transporteinrichtungen (17).

11. Füllmaschine (10) nach mindestens einem der Ansprüche 8 bis 10, **dadurch gekennzeichnet, dass** die Sensoreinrichtung, in Transportrichtung der Objekte betrachtet vor der Befüllposition angeordnet ist.

12. Verfahren zum Ausstoßen von Nahrungsmittelmasse mit einer Füllmaschine (10) nach mindestens einem der Ansprüche 8-11, wobei die Masse aus dem Fülltrichter (9) über das Förderwerk (8) zum Füllstromteiler (1) gefördert wird,
im Füllstromteiler (1) ein einströmender Massestrom in mehrere Teilmasseströme aufgeteilt, in mehreren Teilleitungen (12) weitertransportiert und über deren Auslass (13) insbesondere portionsweise auf oder in ein Objekt ausgestoßen wird,
wobei über mehrere gemeinsam angetriebene Dosiereinrichtungen (3) der Volumenstrom der jeweiligen Teilmasseströme eingestellt wird, **dadurch gekennzeichnet, dass**
in den jeweiligen Teilleitungen (12) jeweils eine Ventileinrichtung (6) angeordnet ist, die auf ein Signal einer Steuereinrichtung (14) der Füllmaschine (10) den Teilmassestrom für jede Teilleitung (12) individuell umleiten kann, derart, dass keine Masse über den Auslass der jeweiligen Teilleitung (12) ausgestoßen wird, unabhängig von den Masseströmen in den anderen Teilleitungen.

13. Verfahren nach Anspruch 12, **dadurch gekennzeichnet, dass** die Steuereinrichtung (14) ein Signal an die Ventileinrichtung (6) zum Umleiten eines Teilmassestroms sendet, wenn eine Sensoreinrichtung (5) erkennt, dass für eine Teilleitung (12) kein Objekt vorhanden ist und dieser Teilmassestrom von der Ventileinrichtung (6) umgeleitet wird.

14. Verfahren nach Anspruch 13, **dadurch gekennzeichnet, dass** das Signal zum Umleiten des Teilmassestroms gesendet wird, bevor eine Portion aus der Teilleitung (12) zu einem Ausstoßzeitpunkt in das fehlende Objekt (7) hätte ausgestoßen werden sollen, während die Ventileinrichtungen (6) der anderen Teilleitungen (12) für die von der Sensoreinrichtung (5) erkannt wurde, dass ein Objekt (7) vorhanden ist, den jeweiligen Teilmassestrom nicht umleiten.
